# EUROPEAN PATENT APPLICATION

(11) **EP 4 554 004 A1**
(43) Date of publication of application: **14.05.2025**
(21) Application number: 23852823.6
(22) Date of filing: 28.07.2023
(51) Int. Cl.: H01Q 1/38, H01Q 5/25, H01Q 1/48, H01Q 9/04, H01Q 7/00, H01Q 1/24, H04M 1/02

(54) **ELECTRONIC DEVICE INCLUDING ANTENNA**

(30) Priority: 09.08.2022 KR 20220099538; 10.08.2022 KR 20220100245
(71) Applicant: Samsung Electronics Co., Ltd., Suwon-si, Gyeonggi-do 16677 (KR)
(72) Inventor: OH, Myeongsu, Suwon-si Gyeonggi-do 16677 (KR); AN, Jungchul, Suwon-si Gyeonggi-do 16677 (KR); KIM, Sangkyu, Suwon-si Gyeonggi-do 16677 (KR); KIM, Jin, Suwon-si Gyeonggi-do 16677 (KR); JEONG, Chanbeom, Suwon-si Gyeonggi-do 16677 (KR); CHU, Duho, Suwon-si Gyeonggi-do 16677 (KR); HONG, Hyunju, Suwon-si Gyeonggi-do 16677 (KR)
(74) Representative: HGF
(86) International application number: PCT/KR2023/011075
(87) International publication number: WO 2024/034942

(57) **Abstract**

According to one aspect disclosed herein, an electronic device is provided. The electronic device may comprise: a housing at least partially made of a conductive material; a printed circuit board; a first antenna that operates using a first conductive portion of the housing; a second antenna that operates using a second conductive portion of the housing; a third antenna that operates using a third conductive portion of the housing; a fourth antenna disposed on the printed circuit board; a first communication module connected to the first antenna, the second antenna, and the third antenna; and a second communication module connected to the fourth antenna. The printed circuit board may include: a first section surrounding a space in which at least one electronic component is disposed; a second section opposite the first section; and a third section between the first section and the second section. The first communication module may be disposed on the first section or the third section of the printed circuit board, and the fourth antenna may be disposed on the second section of the printed circuit board.

## Description

### [Technical Field]

Various embodiments of the disclosure relate to an electronic device including an antenna.

### [Background Art]

Recently, electronic devices such as portable terminals having novel functions have been developed at a rapid pace, and as the distribution of the electronic devices has expanded, the proportion of the electronic devices in peoples' lives is gradually increasing.

In addition, with respect to portable terminals such as smartphones, which have become popularized due to the development of mobile communication technology, demand for miniaturization and weight reduction is increasing in order to maximize the portability and convenience of users, and integrated electrical components are being mounted in spaces that are gradually becoming smaller, in order to achieve high performance. Recently, the design complexity of electronic devices has been increasing due to the growing number of bands supporting radio-frequency (RF) communication and the integration of multiple high-performance cameras in smartphones. Accordingly, designs capable of optimizing the performance of each component are required.

Foldable electronic devices may generally be formed with a narrower width compared to bar-type electronic devices. In addition, the hinge structures of foldable electronic devices may not be used as an antenna. Therefore, foldable electronic devices may have limited space for use as antennas or for placing antennas compared to bar-type electronic devices.

Electronic devices may perform positioning operations to locate the position of another electronic device by performing UWB communication with it. For example, an electronic device may calculate a so-called angle of arrival (AoA) of an RF signal received from another electronic device using a UWB patch antenna including at least two patch antennas, and determine the location of another electronic device using the AoA. In addition, for example, the electronic device may determine the distance to another electronic device using a UWB ranging antenna. When a foldable electronic device uses a UWB antenna, the UWB patch antenna may be disposed on a printed circuit board, and the UWB ranging antenna may be configured as a combination of a housing made of a conductive material (e.g., metal) and a laser directing structure (LDS) antenna.

General bar-type electronic devices, which are wide in width, have fewer restrictions on using LDS antennas. However, foldable electronic devices, which are relatively narrow compared to bar-type electronic devices compared to bar-type electronic devices, may have limited usable area for LDS antennas. According to the prior art, in the case of foldable electronic devices, when an antenna is configured by combining a housing made of a conductive material (e.g., metal) and an LDS, the antenna is used in a form laminated on the rear surface of a camera module, but several problems may occur as follows. In the case where an antenna is configured by combining a housing and an LDS, when an RF communication module (e.g., an e-utra NR dual connectivity (ENDC) module) is disposed adjacent to the antenna, harmonic components emitted from the RF communication module may be induced through the housing made of a conductive material, thereby degrading UWB ranging performance. In addition, when an antenna is configured by combining a housing and an LDS and disposed near a camera module, the camera may stop operating.

The above-described information may be provided as background technology for the purpose of aiding in the understanding of the disclosure. No claim or determination is made as to whether any of the foregoing may be applied as prior art with respect to the disclosure.

### [Detailed Description of the Invention]

### [Technical Solution]

According to an aspect of the disclosure, an electronic device is provided. The electronic device may include a housing at least partially made of a conductive material, a printed circuit board, a first antenna configured to operate using a first conductive portion of the housing, a second antenna configured to operate using a second conductive portion of the housing, a third antenna configured to operate using a third conductive portion of the housing, a fourth antenna disposed on the printed circuit board, a first communication module connected to the first antenna, the second antenna, and the third antenna, and a second communication module connected to the fourth antenna. The printed circuit board may include a first portion formed to surround a space where at least one electronic component is disposed, a second portion facing the first portion, and a third portion between the first portion and the second portion. An electronic device may be provided in which the first communication module is disposed on the first portion or the third portion of the printed circuit board, and the fourth antenna is disposed on the second portion of the printed circuit board.

According to an aspect of the disclosure, an electronic device is provided. An electronic device may include a housing at least partially made of a conductive material, a printed circuit board, a first metal antenna configured to operate using at least a portion of the housing, a second metal antenna separated from the first metal antenna by a slit, a PCB-embedded-type antenna embedded in the printed circuit board, a first communication module connected to the first metal antenna and the second metal antenna, and a second communication module connected to the PCB-embedded-type antenna. The printed circuit board may include a first portion formed to surround a space where at least one electronic component is disposed, a second portion facing the first portion, and a third portion between the first portion and the second portion. The first communication module may be disposed on the first portion or the third portion of the printed circuit board, and the PCB-embedded-type antenna may be embedded in the second portion of the printed circuit board.

According to an embodiment of the disclosure, a foldable electronic device 500 is provided. The foldable electronic device may include a first housing including a first side surface member at least partially surrounding a first surface oriented in a first direction, a second surface oriented in a second direction opposite to the first direction, and a space between the first surface and the second surface, and at least partially made of a conductive material, and a second housing including a second side surface member at least partially surrounding a third surface oriented in a third direction, a fourth surface oriented in a fourth direction opposite to the third direction, and a space between the third surface and the fourth surface, the second housing being at least partially made of a conductive material and foldable relative to the first housing, a hinge structure rotatably connecting the first housing and the second housing and providing a folding axis at a center of the first housing and the second housing, and a printed circuit board. The first side surface member or the second side surface member may include: a first side portion disposed parallel to the folding axis, a second side portion extending in a direction intersecting the folding axis from one end of the first side portion, a third side portion extending in a direction intersecting the folding axis from another end of the first side portion, a fourth side portion extending parallel to the folding axis and connecting the second side portion and the third side portion, and multiple slits formed in the first side portion, the second side portion, and the third side portion. The foldable electronic device may further include a first antenna configured to operate using a first conductive portion of the second side portion, a second antenna configured to operate using the second conductive portion of the second side portion, a third antenna configured to operate using a third conductive portion of the third side portion, a fourth antenna disposed on the printed circuit board, a first communication module connected to the first antenna, the second antenna, and the third antenna, and a second communication module connected to the fourth antenna. The printed circuit board may include a first portion formed to surround a space where a camera module is disposed, a second portion facing the first portion, and a third portion between the first portion and the second portion. The first communication module may be disposed on the first portion or the third portion of the printed circuit board, and the fourth antenna may be disposed on the second portion of the printed circuit board.

### [Brief Description of Drawings]

The above-described aspects or other aspects, configurations, and/or advantages regarding various embodiments of the disclosure may become more apparent through the following detailed description made with reference to the accompanying drawings.
FIG. 1 is a block diagram of an electronic device according to an embodiment in a network environment.
FIG. 2 is a view illustrating a foldable electronic device according to an embodiment of the disclosure in an unfolded state.
FIG. 3 is a view illustrating the foldable electronic device according to an embodiment of the disclosure in a folded state.
FIG. 4 is an exploded perspective view illustrating the foldable electronic device according to an embodiment of the disclosure.
FIG. 5 is a view illustrating an electronic device and its internal structure according to an embodiment of the disclosure.
FIG. 6 is an enlarged view of a second side portion of an electronic device housing according to a comparative embodiment of the disclosure.
FIG. 7 is an enlarged perspective view of the second side portion of the electronic device housing according to the comparative embodiment of the disclosure.
FIG. 8 is a view illustrating a printed circuit board according to an embodiment of the disclosure.
FIG. 9 is an enlarged view of the second side portion of the electronic device housing according to an embodiment of the disclosure.
FIG. 10 is an enlarged perspective view of the second side portion of the electronic device housing according to an embodiment of the disclosure.
FIG. 11 is a cross-sectional view of the electronic device according to an embodiment of the disclosure.
FIG. 12 is a view illustrating a current distribution on the second side of the electronic device housing according to an embodiment of the disclosure.
FIG. 13A is a graph showing antenna performance of an electronic device according to an embodiment of the disclosure.
FIG. 13B is a graph showing the antenna performance of the electronic device according to an embodiment of the disclosure.
FIG. 13C is a graph showing the antenna performance of the electronic device according to an embodiment of the disclosure.

Throughout the appended drawings, like reference numerals may be assigned to like components, configurations, and/or structures.

### [Mode for Carrying out the Invention]

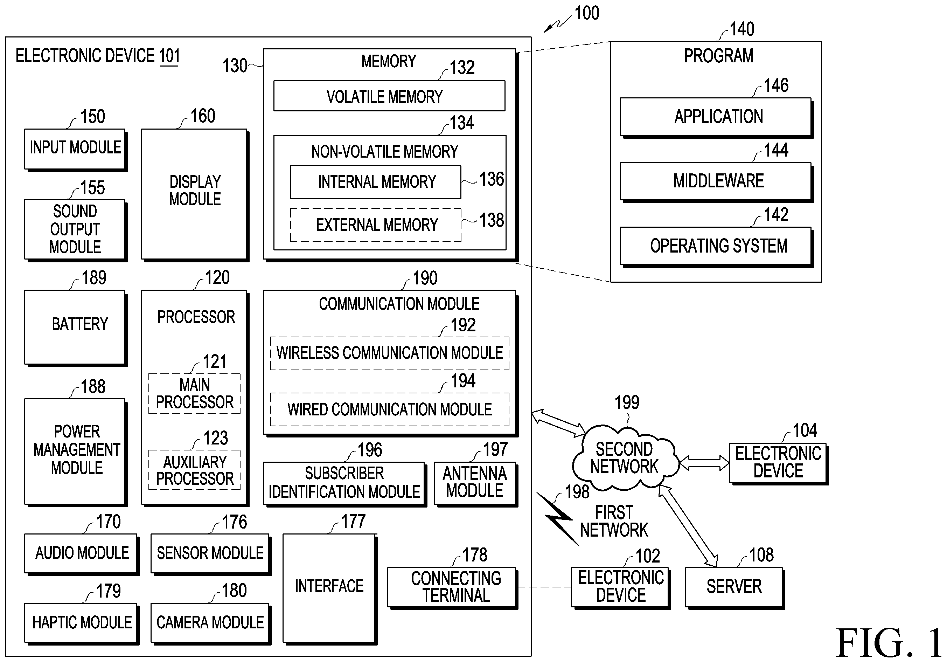

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

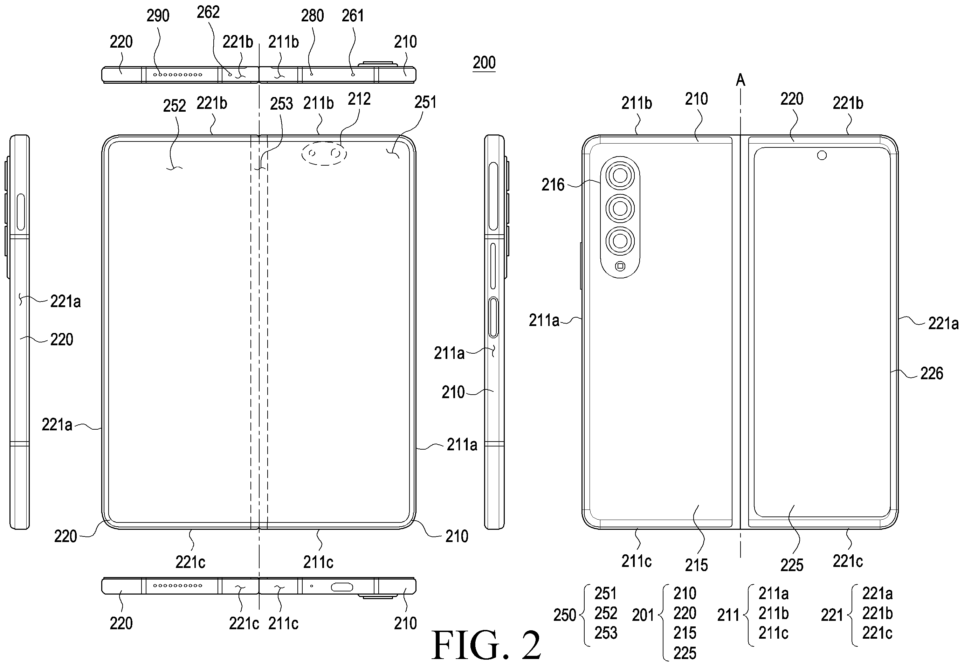

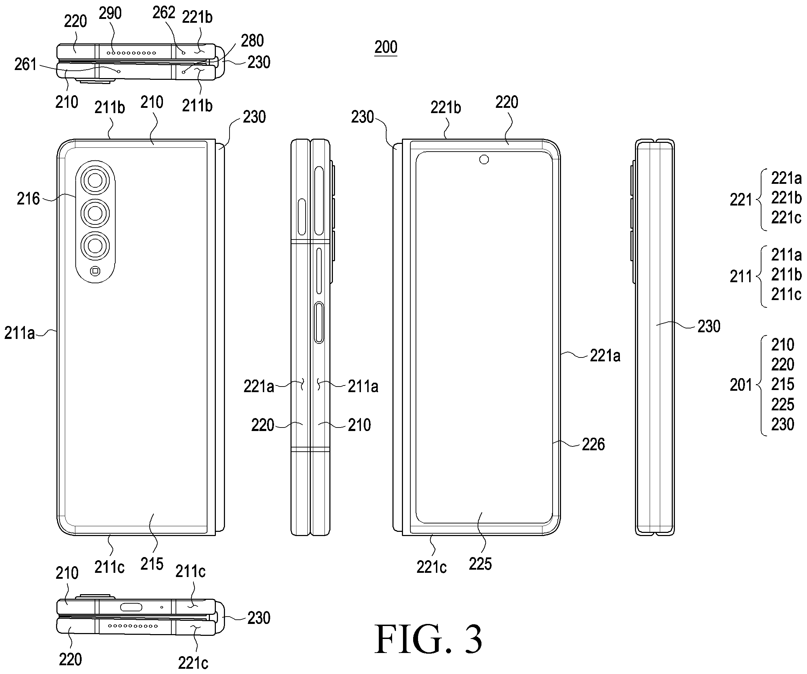

FIG. 2 is a view illustrating a foldable electronic device according to an embodiment of the disclosure in an unfolded state. FIG. 3 is a view illustrating the foldable electronic device according to an embodiment of the disclosure in a folded state.

FIG. 2 is a view illustrating the unfolded state of an electronic device 200 according to an embodiment of the disclosure. FIG. 3 is a view illustrating the folded state of the electronic device 200 according to an embodiment of the disclosure. The electronic device 200 may be an example of the electronic device 101 illustrated in FIG. 1, and may be a foldable or bendable electronic device.

Referring to FIGS. 2 and 3, in an embodiment, the electronic device 200 may include a foldable housing 201 and a flexible or foldable display 250 (hereinafter, simply referred to as a "flexible display 250") (e.g., the display device 160 in FIG. 1) disposed in a space defined by the foldable housing 201. According to an embodiment, the surface on which the flexible display 250 is disposed (or the surface on which the flexible display 250 is visible from the outside of the electronic device 200) may be defined as the front surface of the electronic device 200. In addition, the surface opposite to the front surface may be defined as the rear surface of the electronic device 200. Furthermore, the surface surrounding the space between the front surface and the rear surface may be defined as the side surface of the electronic device 200.

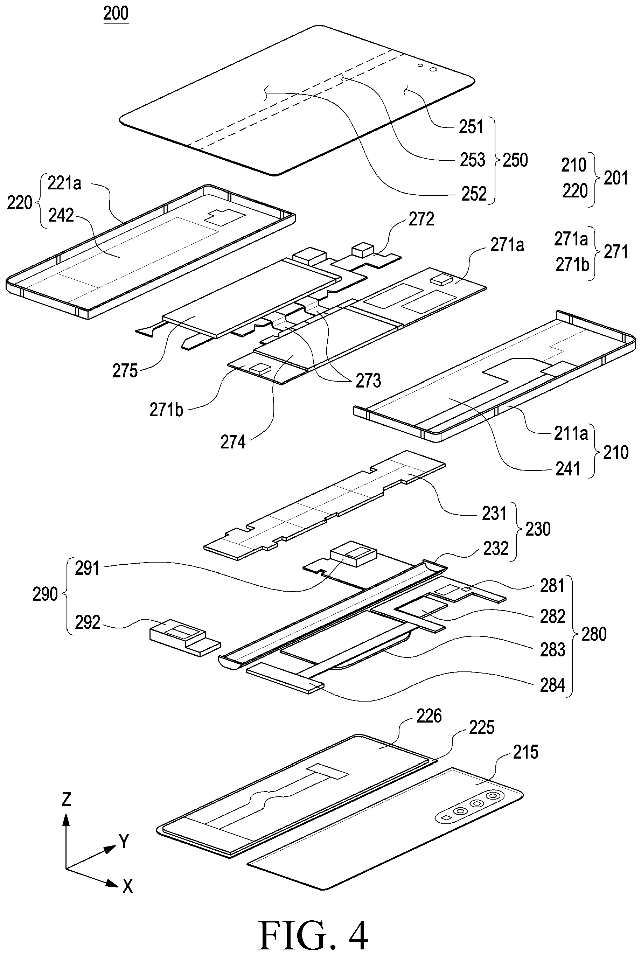

According to an embodiment, the foldable housing 201 may include a first housing 210 including a sensor area 212, a second housing 220, a first rear surface cover 215, a second rear surface cover 225, and a hinge assembly 230. Here, the hinge assembly 230 may include a hinge cover (e.g., the hinge cover 232 in FIG. 4) covering a foldable portion of the foldable housing 201. The foldable housing 201 of the electronic device 200 is not limited to the shape and assembly illustrated in FIGS. 2 and 3, but may be implemented by a combination and/or an assembly of different shapes or components. For example, in another embodiment, the first housing 210 and the first rear surface cover 215 may be integrated, and the second housing 220 and the second rear surface cover 225 may be integrated.

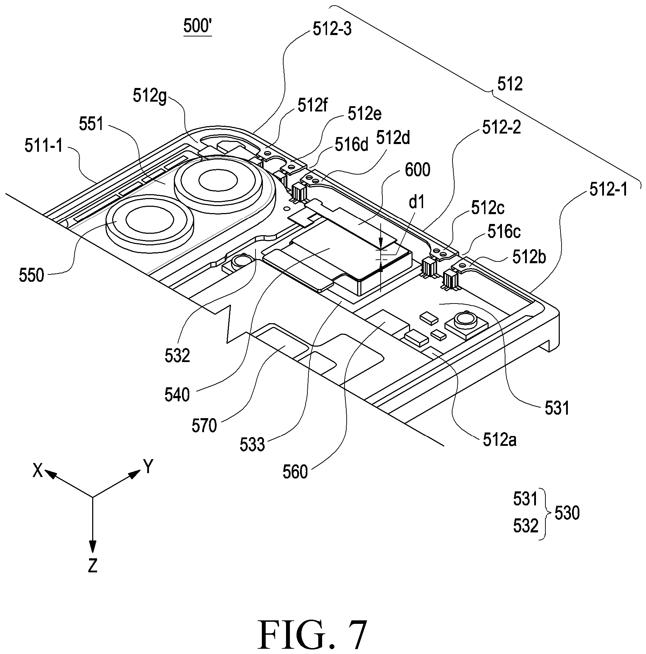

According to an embodiment, an illuminance sensor (e.g., the illuminance sensor 720 in FIG. 7) and an image sensor (not illustrated) may be disposed in the sensor area 212. The illuminance sensor 720 may detect the amount of light surrounding the electronic device 200, and the image sensor may convert light incident through a camera lens into a digital signal. The illuminance sensor 720 and the image sensor may be visually exposed to the flexible display 250. According to another embodiment, the illuminance sensor and the image sensor may not be visually exposed. For example, the camera may be configured as an under-display camera (UDC). The pixels of an area of the flexible display 250 corresponding to the position of the UDC may be configured differently from the pixels of other areas, preventing the image sensor and/or the camera from being visually exposed.

According to an embodiment, the first housing 210 may be connected to the hinge assembly 230, and may include a first front surface oriented in a first direction and a first rear surface oriented in a direction opposite to the first direction. The second housing 220 may be connected to the hinge assembly 230, and may include a second front surface oriented in a second direction and a second rear surface oriented in a direction opposite to the second direction. The second housing 220 is rotatable relative to the first housing 210 about the hinge assembly 230. The electronic device 200 may be deformable to the folded state or the unfolded state.

According to an embodiment, the first housing 210 may include a first side surface 211a spaced apart from and arranged parallel to the folding axis A of the hinge assembly 230 between the first front surface and the first rear surface, and the second housing 220 may include a second side surface 221a spaced apart from and arranged parallel to the folding axis A of the hinge assembly 230 between the second front surface and the second rear surface. In addition, the first housing 210 may include a third side surface 211b that is perpendicular to the first side surface 211a and has one end connected to the first side surface 211a and the other end connected to the hinge assembly 230, and a fourth side surface 211c that is perpendicular to the first side surface 211a, has one end connected to the first side surface 211a and the other end connected to the hinge assembly 230, and is spaced apart in a direction parallel to the third side surface 211b. The second housing 220 may include a fifth side surface 221b that is perpendicular to the second side surface 221a and has one end connected to the second side surface 221a and the other end connected to the hinge assembly 230, and a sixth side surface 221c that is perpendicular to the second side surface 221a, has one end connected to the second side surface 221a and the other end connected to the hinge assembly 230, and is spaced apart in a direction parallel to the fifth side surface 221b. When the second housing 220 is folded relative to the first housing 210 about the hinge assembly 230, the first side surface 211a may come closer to the second side surface 221a, and when the second housing 220 is unfolded relative to the first housing 210 about the hinge assembly 230, the first side surface 211a and the second side surface 221a may move away from each other.

According to an embodiment, when the electronic device 200 is in the fully folded state, the first front surface and the second front surface may face each other, when the electronic device 200 is in the fully unfolded state, the second direction may be the same as the first direction. In the fully unfolded state, the distance between the first side surface 211a and the second side surface 221a may be the furthest.

According to an embodiment, the first housing 210 and the second housing 220 may be disposed on opposite sides about the folding axis A and may have generally symmetrical shapes with respect to the folding axis A. As will be described later, the first housing 210 and the second housing 220 may form an angle or a distance therebetween, which may be variable depending on whether the electronic device 200 is in the unfolded state, in the folded state, or in the intermediate state in which the electronic device 101 is partially unfolded (or partially folded).

According to an embodiment, as illustrated in FIG. 2, the first housing 210 and the second housing 220 may define together a recess that accommodates the flexible display 250 therein. According to an embodiment, the first housing 210 and the second housing 220 may be at least partially made of a metal or non-metal material having rigidity of a level selected in order to support the flexible display 250. The at least a portion made of the metal material may provide a ground plane of the electronic device 200, and may be electrically connected to a ground line provided on a printed circuit board disposed inside the foldable housing 201.

According to an embodiment, a protective member (not illustrated) may be disposed on the exterior of the flexible display 250. The protective member may be configured integrally with or separately from the side surfaces of the foldable housing 201. The flexible display 250 may not be bonded to the side surfaces of the foldable housing 201 and/or the protective member. A gap may be formed between the flexible display 250 and the protective member. The protective member may be configured to cover the internal components of the electronic device 200 from the outside or protect the internal components of the electronic device 200 from external impact. According to an embodiment, the protective member may be configured to cover the wires mounted on the flexible display 250 from the outside or protect the wires from external impact.

According to an embodiments, the first rear surface cover 215 may be disposed on the rear surface of the electronic device 200 on one side of the folding axis A and may have, for example, a substantially rectangular periphery, which may be surrounded by the first housing 210. Similarly, the second rear surface cover 225 may be disposed at the other side of the folding axis A on the rear surface of the electronic device 200, and the periphery may be surrounded by the second housing 220.

According to an embodiment, the first rear surface cover 215 and the second rear surface cover 225 may have substantially symmetrical shapes about the folding axis A. However, the first rear surface cover 215 and the second rear surface cover 225 do not necessarily have mutually symmetrical shapes, and in another embodiment, the electronic device 200 may include a first rear surface cover 215 and a second rear surface cover 225 having various shapes. **In** another embodiment, the first rear surface cover 215 may be configured integrally with the first housing 210, and the second rear surface cover 225 may be configured integrally with the second housing 220.

According to an embodiment, the first rear surface cover 215, the second rear surface cover 225, the first housing 210, and the second housing 220 may define a space in which various components (e.g., a printed circuit board or a battery) of the electronic device 200 may be disposed. According to an embodiment, one or more components may be disposed or visually exposed on the rear surface of the electronic device 200. For example, one or more components or sensors may be visually exposed through the first rear surface area 216 of the first rear surface cover 215. In various embodiments, the sensors may include a proximity sensor and/or a rear camera. In another embodiment, at least a portion of a sub-display may be visually exposed through a second rear surface area 226 of the second rear surface cover 225.

According to an embodiment, a front camera disposed on the front surface (e.g., the second front surface) of the electronic device 200 or a rear camera exposed through the first rear surface area 216 of the first rear surface cover 215 may include one or more lenses, an image sensor, and/or an image signal processor. The flash may include, for example, a light-emitting diode or a xenon lamp. In some embodiments, two or more lenses (e.g., an infrared camera, a wide-angle lens, and a telephoto lens), and image sensors may be arranged on one surface of the electronic device 200.

Referring to FIG. 3, a hinge cover (e.g., the hinge cover 232 in FIG. 4) included in a hinge assembly 230 may be configured to be disposed between the first housing 210 and the second housing 220 so as to cover an internal component (e.g., the hinge assembly 230). According to an embodiment, the hinge assembly 230 may be covered by a portion of the first housing 210 and a portion of the second housing 220, or may be exposed outside depending on the state of the electronic device 200 (the unfolded state, the intermediate state, or the folded state).

According to an embodiment, as illustrated in FIG. 2, when the electronic device 200 is in the unfolded state (e.g., the fully unfolded state), the hinge assembly 230 may not be exposed by being covered by the first housing 210 and the second housing 220. As another example, as illustrated in FIG. 3, when the electronic device 200 is in the folded state (e.g., the fully folded state), the hinge cover 230 may be exposed outside between the first housing 210 and the second housing 220. As another example, when the first housing 210 and the second housing 220 are in the intermediate state of being folded with a certain angle therebetween, the hinge assembly 230 may be partially exposed outside between the first housing 210 and the second housing 220. However, in this case, the exposed area may be smaller than that in the fully folded state. In an embodiment, the hinge assembly 230 may include a curved surface.

According to an embodiment, the flexible display 250 may be disposed in the space defined by the foldable housing 201. For example, the flexible display 250 may be seated in the recess defined by the foldable housing 201 and may be externally visible through the front surface (e.g., the first front surface and/or the second front surface) of the electronic device 200. According to an embodiment, the flexible display 250 may constitute most of the front surface (e.g., the first front surface and/or the second front surface) of the electronic device 200. Therefore, the front surface (e.g., the first front surface and/or the second front surface) of the electronic device 200 may include the flexible display 250 and a portion of the first housing 210 and a portion of the second housing 220 adjacent to the flexible display 250. In addition, the rear surface (e.g., the first rear surface and/or the second rear surface) of the electronic device 200 may include the first rear surface cover 215, a partial area of the first housing 210 adjacent to the first rear surface cover 215, the second rear surface cover 225, and a partial area of the second housing 220 adjacent to the second rear surface cover 225.

According to an embodiment, the term "flexible display" 250 may mean a display, at least a partial area of which is transformable into a planar surface or a curved surface. According to an embodiment, the flexible display 250 may include a folding area 253, a first area 251 arranged on one side of the folding area 253 (e.g., the right side of the folding area 253 illustrated in FIG. 2), and a second area 252 arranged on the other side of the folding area 253 (e.g., the left side of the folding area 253 illustrated in FIG. 2).

However, the area division of the flexible display 250 illustrated in FIG. 2 is exemplary, and the flexible display 250 may be divided into multiple areas (e.g., four or more areas or two areas) depending on the structure or function thereof. For example, in the embodiment illustrated in FIG. 2, the areas of the flexible display 250 may be divided by the folding area 253 extending in parallel to the folding axis A, but in another embodiment, the flexible display 250 may be divided with reference to another folding axis (e.g., a folding axis parallel to the width direction of the electronic device).

According to an embodiment of the disclosure, the flexible display 250 may be coupled to or disposed adjacent to a touch panel equipped with a touch detection circuit and a pressure sensor capable of measuring the intensity (pressure) of a touch. For example, as an example of a touch panel, the flexible display 250 may be coupled to or disposed adjacent to a touch panel that detects an electromagnetic resonance (EMR)-type stylus pen.

According to an embodiment, the first area 251 and the second area 252 may have generally symmetrical shapes about the folding area 253.

Hereinafter, the operations of the first housing 210 and the second housing 220 and respective areas of the flexible display 250 according to the state of the electronic device 200 (e.g., the unfolded state, the folded state, or the intermediate state) will be described.

According to an embodiment, when the electronic device 200 is in the unfolded state (the flat state) (e.g., FIG. 2), the first housing 210 and the second housing 220 may be disposed to form an angle of 180 degrees therebetween and to be oriented in the same direction. The surface of the first area 251 and the surface of the second area 252 of the flexible display 250 form 180 degrees from each other and may be oriented in the same direction (e.g., the front direction of the electronic device). In this case, the folding area 253 may define the same plane as the first area 251 and the second area 252.

According to an embodiment, when the electronic device 200 is in the folded state (e.g., FIG. 3), the first housing 210 and the second housing 220 may be disposed to face each other. The surface of the first area 251 and the surface of the second area 252 of the flexible display 250 may face each other while forming a small angle (e.g., an angle between 0 degrees and 10 degrees) relative to each other. At least a portion of the folding area 253 may be provided as a curved surface with a predetermined curvature.

According to an embodiment, when the electronic device 200 is in the intermediate state, the first housing 210 and the second housing 220 may be disposed to form a certain angle therebetween. The surface of the first area 251 and the surface of the second area 252 of the flexible display 250 may form an angle greater than that in the folded state and smaller than that in the unfolded state. At least a portion of the folding area 253 may form a curved surface with a predetermined curvature, and the curvature in this case may be smaller than that in the folded state.

FIG. 4 is an exploded perspective view illustrating the foldable electronic device according to an embodiment of the disclosure.

In FIG. 4, a spatial coordinate system defined by the X-axis, the Y-axis, and the Z-axis orthogonal to each other is illustrated. In the following detailed description, the length direction, the width direction, and/or the thickness direction of an electronic device may be referred to, wherein the length direction may be defined as the "Y-axis direction", the width direction may be defined as the "X-axis direction", and/or the thickness direction may be defined as the "Z-axis direction". In an embodiment, the direction in which a component is oriented may be mentioned along with the orthogonal coordinate system illustrated in the drawings, as well as the negative/positive symbol "(-/+)". For example, the front surface of an electronic device or a housing may be defined as a "surface oriented in the +Z direction", and the rear surface may be defined as a "surface oriented in the -Z direction". In an embodiment, a side surface of the electronic device or the housing may include an area oriented in the +X direction, an area oriented in the +Y direction, an area oriented in the -X direction, and/or an area oriented in the -Y direction. In an embodiment, the "X-axis direction" may include both the "-X direction" and the "+X direction". It is noted that these are based on the Cartesian coordinate system illustrated in the drawings for the sake of brevity of description, and the descriptions of these directions or components do not limit the embodiment(s) of the disclosure.

The housing 201 (e.g., a foldable housing), the first housing 210, the second housing 220, the hinge assembly 230, and the flexible display 250 disclosed in FIG. 4 may be identical to or similar to the foldable housing 201, the first housing 210, the second housing 220, the hinge assembly 230, and the flexible display 250 disclosed in FIGS. 2 and 3. Therefore, a description of the same configuration may be omitted.

According to an embodiment of the disclosure, the electronic device 200 may include various electronic components arranged in an inner or outer space of the first housing 210 and the second housing 220. Various electronic components include, for example, a processor (e.g., the processor 120 in FIG. 1), memory (e.g., the memory 130 in FIG. 1), an input module (e.g., the input module 150 in FIG. 1), a sound output module (e.g., the sound output module 155 in FIG. 1), a display 250 (e.g., the display module 160 in FIG. 1), an audio module (e.g., the audio module 170 in FIG. 1), a sensor (e.g., the sensor module 176 in FIG. 1), an interface (e.g., the interface 177 in FIG. 1), a connection terminal (e.g., the connection terminal 178 in FIG. 1), a haptic module (e.g., the haptic module 179 in FIG. 1), a camera module (e.g., the camera module 180 in FIG. 1), a power management module 188, batteries 274 and 275 (e.g., the battery 189 in FIG. 1), a communication module (e.g., the communication module in FIG. 1), a subscriber identification module (e.g., the subscriber identification module 196 in FIG. 1), or an antenna module (e.g., the antenna module 197 in FIG. 1). The electronic components may be appropriately diffused and arranged in the inner or outer space of the first housing 210 and the second housing 220. At least one of these components (e.g., the connection terminal 178) may be omitted, or one or more other components may be added to the electronic device 200. In addition, some of these components may be integrated into a single component.

According to an embodiment, the electronic device 200 may be a foldable electronic device and may include multiple batteries to supply and store power required for driving the electronic components. For example, the electronic device 200 may include a first battery 274 and a second battery 275 disposed in the first housing 210 and the second housing 220, respectively.

According to an embodiment, the electronic device 200 may be a foldable electronic device and may include a first plate 241 and/or a second plate 242 on which components are disposed, in the first housing 210 and the second housing 220, respectively. Various electronic components and/or circuit boards 271 and 272 may be disposed on the first plate 241 and/or the second plate 242. According to an embodiment, the first plate 241 and a first circuit board 271 may be disposed in the first housing 210, and a second plate 242 and a second circuit board 272 may be disposed in the second housing 220. The first plate 241 may include a first surface oriented in the first direction, and the second plate 242 may include a second surface oriented in the second direction. The first plate 241 and the second plate 242 may be folded or unfolded relative to each other by the hinge plate 231 provided to correspond to the folding area 253 of the flexible display 250, and configured to face each other in the folded state and to allow the first surface and the second surface to be oriented in the same direction in the unfolded state.

According to an embodiment, the first circuit board 271 may be disposed under (in the -Z-axis direction of) the first plate 241, and the second circuit board 272 may be disposed under (in the -Z-axis direction of) the second plate 242.

According to an embodiment, signals of a processor for implementing various functions and operations of the electronic device 200 may be transmitted to electronic components through various conductive lines 273 formed on printed circuit boards 271 and 272 and/or connectors (not illustrated).

Referring to FIG. 4, according to an embodiment, an electronic device 200 may include a flexible display 250, a foldable housing 201, a hinge assembly 230, a first circuit board 271, and a second circuit board 272.

According to an embodiment, the foldable housing 201 may include a first housing 210, a second housing 220, a first rear surface cover 215, a second rear surface cover 225, and a hinge assembly 230.

According to an embodiment, the flexible display 250 may include a display panel (not illustrated). In an embodiment, the first plate 241 and the second plate 242 may be disposed between the display panel and the first and second circuit boards 271 and 272. The hinge assembly 230 may be disposed between the first plate 241 and the second plate 242.

According to an embodiment, the hinge assembly 230 may include a hinge member 231 and a hinge cover 232, and the hinge member 231 may include a hinge module and a hinge plate. The hinge cover 232 may cover a structure disposed inside the hinge assembly 230.

According to various embodiments, the electronic device 200 may include a first circuit board 271 and a second circuit board 272. The first circuit board 271 and the second circuit board 272 may be disposed inside a space defined by the first plate 241, the second plate 242, the first housing 210, the second housing 220, the first rear surface cover 215, and the second rear surface cover 225. Components for implementing various functions of the electronic device 200 may be disposed on the first printed circuit board 271 and the second printed circuit board 272. According to an embodiment, the first circuit board 271 may be separated into two circuit boards. For example, the first circuit board 271 may include a (1-1)^{th} circuit board 271a disposed at the top of the electronic device (the upper portion when looking at the front and rear surfaces of the electronic device, as illustrated in FIGS. 2 and 3) and a (1-2)^{th} circuit board 271b disposed at the lower end of the electronic device (the lower portion when looking at the front and rear surfaces of the electronic device, as illustrated in FIGS. 2 and 3). The (1-1)^{th} circuit board 271a may be physically separated from the (1-2)^{th} circuit board 271b, and may be electrically connected by a connector (e.g., a PCB or an FPCB) according to an embodiment.

According to an embodiment, the first housing 210 and the second housing 220 may be assembled to each other such that the first and second plates 241 and 242 are coupled to opposite sides of the hinge assembly 230 in the state in which the flexible display 250 is coupled. For example, the first housing 210 may be coupled by sliding on one side of the hinge assembly 230, and the second housing 220 may be coupled by sliding on the other side of the hinge assembly 230.

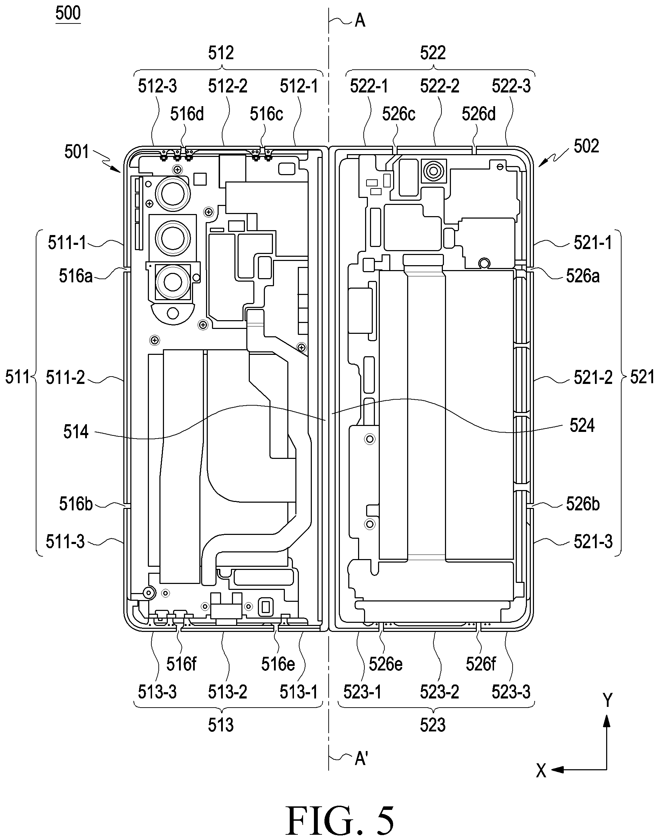

Referring to FIG. 4, the electronic device 200 may include an antenna 280. For example, using the antenna 280, the electronic device 200 may execute short-range communication with an external device or may transmit/receive power required for charging to/from an external device in a wireless manner. The type of the antenna 280 may vary, and the antenna 280 may be disposed at multiple positions within the electronic device 200. For example, the antenna 280 may include an ultra-wideband (UWB) antenna 281. According to an embodiment, the UWB antenna 281 may be disposed at or near the top of the electronic device 200 (the upper portion when looking at the front and rear surfaces of the electronic device, as illustrated in FIGS. 2 and 3). In addition, the antenna 280 may include a near-field communication (NFC) antenna 282, a wireless charging antenna, and/or a magnetic secure transmission (MST) antenna 283. However, the disclosure is not limited thereto, and may further include various types of antennas (e.g., the antenna 284). According to an embodiment, the electronic device 200 may form an antenna using a portion of the housing that includes a conductive material (hereinafter, referred to as a "conductive portion"). This will be described in detail later with reference to the embodiment of FIG. 5.

The electronic device 200 may include various other components. As an example of the components, speaker modules 291 and 292 are illustrated in FIG. 4. The first speaker module 291 may be disposed at the top of the electronic device, and the second speaker module 292 may be disposed at the bottom of the electronic device.

It is noted that, in the following detailed description, the electronic devices 101, 102, 104, and 200 of the preceding embodiments may be referred to, and, for the components that may be easily understood through the preceding embodiments, the same reference numerals may be assigned or omitted, or a detailed description thereof may also be omitted.

FIG. 5 is a view illustrating an electronic device and its internal structure according to an embodiment of the disclosure. The configuration of side surface member(s) in the electronic device is described with reference to FIG. 5.

The electronic device may include a first side surface member 501 and a second side surface member 502. In an embodiment, the first side surface member 501 and the second side surface member 502 may have a frame shape surrounding the inner space of the housing (e.g., the first housing 210 and the second housing 220 in FIG. 2). In some embodiments, the first side surface member 501 and the second side surface member 502 may have substantially the same structure even though they are somewhat different in some shapes. According to an embodiment, the first side surface member 501 and the second side surface member 502 may at least partially include a conductive material. For example, FIG. 5 illustrates substantially conductive material portions of the first side surface member 501 and the second side surface member 502. The first side surface member 501 and the second side surface member 502 may be completed as a closed curve shape by including a non-conductive material, for example, an insulating material, as well as the conductive material portion.

According to an embodiment, the first side surface member 501 may include a first side portion 511, a second side portion 512, a third side portion 513, and/or a fourth side portion 514. In some embodiments, the first to fourth side portions 511, 512, 513, and 514 may be referred to as "first to fourth frames" or "first to fourth side walls". In an embodiment, the first side portion 511 may be aligned with or arranged parallel to the folding axis A-A'. The second side portion 512 may be arranged in a direction intersecting or substantially perpendicular to the folding axis A-A' from one end (e.g., the top) of the first side portion 511. The third side portion 513 may be arranged in a direction intersecting or substantially perpendicular to the folding axis A-A' from the other end (e.g., the bottom) of the first side portion 511. The fourth side portion 514 may be connected to the ends of the second side portion 512 and the third side portion 513, and may extend substantially parallel to the folding axis A-A'. In an embodiment, the fourth side portion 514 may be disposed adjacent to the hinge structure or the hinge cover (e.g., the hinge structure 264 or the hinge cover 265 in FIG. 4), and may extend in the direction of the folding axis A-A' substantially parallel to the hinge structure 264 or the hinge cover 265.

According to an embodiment, the first side surface member 501 may include multiple slits 516a, 516b, 516c, 516d, 516e, and 516f that at least partially separate the conductive material portions. In some embodiments, the multiple slits 516a, 516b, 516c, 516d, 516e, and 516f may be filled with a nonconductive material, in which a slit filled with a nonconductive material may be referred to as a "nonconductive portion" or a "nonconductive material portion" as needed. A structure made of an insulating material may be formed in at least a portion of the area surrounded by the first to fourth side portions 511, 512, 513, and 514. In some embodiments, the multiple slits 516a, 516b, 516c, 516d, 516e, and 516f may be filled with an insulating material.

According to an embodiment, the first slit 516a and the second slit 516b may be formed in the first side portion 511, the third slit 516c and the fourth slit 516d may be formed in the second side portion 512, and the fifth slit 516e and the sixth slit 516f may be formed in the third side portion 513. According to an embodiment, one of the slits may be omitted, and additional slits (not illustrated) may be added.

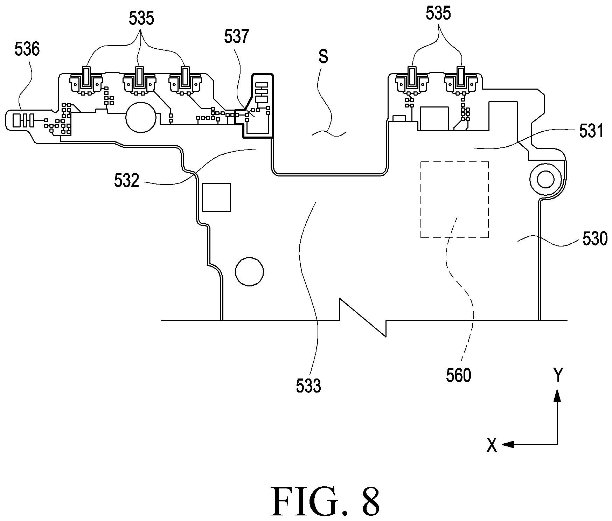

The second side surface member 502 may include a fifth side portion 521, a sixth side portion 522, a seventh side portion 523, and/or an eighth side portion 524. In addition, the first to fourth side portions 511, 512, 513, 514, and 515 may be referred to as "fifth to eight frames" or "fifth to eighth side walls". In an embodiment, the fifth side portion 521 may be aligned with or arranged parallel to the folding axis A-A'. The sixth side portion 522 may be arranged in a direction intersecting or substantially perpendicular to the folding axis A-A' from one end (e.g., the top) of the fifth side portion 521. The seventh side portion 523 may be arranged in a direction intersecting or substantially perpendicular to the folding axis A-A' from the other end (e.g., the bottom) of the fifth side portion 521. The eight side portion 524 may be connected to the ends of the sixth side portion 522 and the seventh side portion 523, and may extend substantially parallel to the folding axis A-A'. In an embodiment, the eighth side portion 524 may be disposed adjacent to the hinge structure or the hinge cover (e.g., the hinge structure 264 or the hinge cover 265 in FIG. 8), and may extend in the direction of the folding axis A-A' substantially parallel to the hinge structure 264 or the hinge cover 265. According to an embodiment, the second side surface member 502 may include multiple slits 526a, 526b, 526c, 52d, 526e, and 526f that at least partially separate the conductive material portions. Depending on the design, the second side surface member 502 may have a shape symmetrical to the first side surface member 501. In the following description, the description of the configuration of the first side surface member 501 may be applied to the configuration of the second side surface member 502.

The first side portion 511, the second side portion 512, the third side portion 513, and the fourth side portion 514 may be at least partially made of a conductive material. For example, the first side portion 511, the second side portion 512, the third side portion 513, and/or the fourth side portion 514 may be at least partially made of a radiating conductor. In an embodiment, the first side portion 511, the second side portion 512, the third side portion 513, and/or the fourth side portion 514 may function as radiators (e.g., radiating conductors) of antennas of an electronic device (e.g., the electronic device 200 in FIG. 2). For example, a processor or a communication module (e.g., the processor 120 or the communication module 190 in FIG. 1) of the electronic device 200 may perform wireless communication using at least a portion of the first side portion 511, the second side portion 512, the third side portion 513, and/or the fourth side portion 514. According to an embodiment, a portion of the first side portion 511 (e.g., the first conductive portion 511-1 of the first side portion 511) and a portion of the second side 512 (e.g., the third conductive portion 512-3 of the second side portion 512) may be utilized together as a single radiating conductor. According to one embodiment, a portion of the second side 512 (e.g., the first conductive portion 512-1 of the second side 512) and a portion of the fourth side portion 514 may be utilized together as a single radiating conductor.

However, when the electronic device 500 is a foldable electronic device as illustrated in the drawing, the fourth side portion 514 may overlap the hinge structure, and thus may have lower utilization as an antenna compared to other side portions (the first side portion 511, the second side portion 512, and the third side portion 513). The following embodiment will be described focusing on an embodiment in which at least a portion of the first side portion 511, the second side portion 512, and the third side portion 513 is utilized as a radiating conductor.

For example, a portion of the second side portion 512 may be utilized as a radiating conductor, and at this time, may be electrically connected to a printed circuit board (e.g., the first printed circuit board 271 in FIG. 4). The second side portion 512 may include terminals 512a, 512b, 512c, 512d, 512e, 512f, and 512g for power and ground. For example, a power terminal formed on the second side portion 512 may be electrically connected to a printed circuit board (e.g., the first printed circuit board 271 in FIG. 4), and a ground terminal formed at another portion of the second side portion 512 may be connected to the printed circuit board (e.g., the first printed circuit board 271 in FIG. 4). According to an embodiment, the terminal may be electrically connected to the printed circuit board through a connecting member (e.g., a c-clip) arranged on the printed circuit board. A conductive material portion forming the second side portion 512 between the position where the power terminal is connected and the position where the ground terminal is connected may form a portion of an antenna.

According to an embodiment, the second side portion 512 may include a first conductive portion 512-1 and a second conductive portion 512-2 separated by a first slit 516c, and a second conductive portion 512-2 and a third conductive portion 512-3 separated by a second slit 516d. The positions of the power terminal and the ground terminal may be provided adjacent to the slits. Therefore, the lengths of the conductive portions may be determined depending on the positions of slits. As will be described in detail later, the printed circuit board 530 may include a first portion 531, a second portion 532, and a third portion 533 surrounding a space in which at least one electronic component may be mounted. The second conductive portion 512-2 of the second side portion 512 may be electrically connected to a power portion or ground portion included in the first portion 531 of the printed circuit board at a position adjacent to the first slit 516c, and may be electrically connected to a ground portion or a power portion included in the second portion 532 of the printed circuit board at a position adjacent to the second slit 516d. According to an embodiment, the length of the conductive portion of the second side portion 512 may be adjusted such that the second side portion 512 operates as a radiating conductor having a radiation performance required in the electronic device.

The description of the first conductive portion 512-1, the second conductive portion 512-2, and the third conductive portion 512-3 of the second side portion 512 may be applied to the first conductive portion 511-1, the second conductive portion 511-2, and the third conductive portion 511-3 included in the first side portion 511, and the first conductive portion 513-1, the second conductive portion 513-2, and the third conductive portion 513-3 included in the third side member 513, and further, may be applied to the fifth side portion 521, the sixth side portion 522, and/or the seventh side portion 523 included in the second side surface member 502.

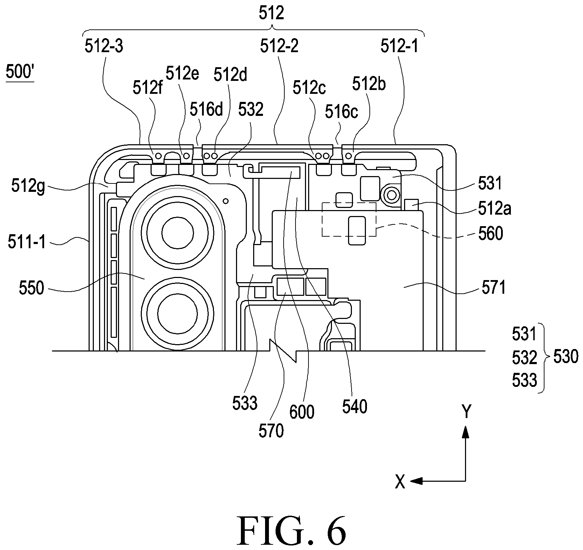

FIG. 6 is an enlarged view of a second side portion of an electronic device housing according to a comparative embodiment of the disclosure. FIG. 7 is an enlarged perspective view of a second side portion of the electronic device housing according to the comparative embodiment of the disclosure.

The electronic device 500' according to the comparative embodiment may include a housing 501 at least partially made of a conductive material and a printed circuit board 530, and may include a first antenna operating using a first conductive portion 512-1 of the second side portion 512, a second antenna operating using a second conductive portion 512-2 of the second side portion 512, and a third antenna operating using a third conductive portion 512-3 of the second side portion 512. In addition, the electronic device 500' may include a first communication module 560 connected to a first antenna, a second antenna, and a third antenna. According to an embodiment, the first antenna may be referred to as a first metal antenna, the second antenna may be referred to as a second metal antenna, and the third antenna may be referred to as a third metal antenna.

The first communication module 560 may establish a communication channel of a band to be used for wireless communication with a cellular network, and may support legacy network communication and/or 5G network communication through the established communication channel. That is, the first communication module 560 may support communication corresponding to various bands to be used for wireless communication with a cellular network. According to an embodiment, the first communication module 560 may include modules configured to perform communication corresponding to various bands, in which the modules may be distinguished and separated based on designated bands. For example, the first communication module 560 may include a low-noise amplifier (LNA) module, which is a communication module for supporting a legacy network (e.g., a second generation (2G), 3G, 4G, or long term evolution (LTE) network), and a module for 5G communication (or RF communication), for example, an ENDC module. In the drawings of the disclosure including FIG. 6, the LNA module and the ENDC module are illustrated as being implemented in a single chip or a single package, but they may be physically separated from each other. For example, the first antenna operating using the first conductive portion 512-1 of the second side portion 512 may be used as a transmitting antenna (Tx antenna) that is connected to the ENDC module and performs a signal transmission operation (Tx operation). In addition, as an example, the third antenna operating using the third conductive portion 512-3 of the second side portion 512 may be used as a receiving antenna (Rx antenna) that supports a legacy network. For example, the second antenna operating using the second conductive portion 512-2 of the second side 512 may also be used as a receiving antenna supporting a legacy network, but may be configured to support a different band from the third antenna. For example, the second antenna may be configured to support a low band and the third antenna may be configured to support a mid/high band. The first antenna, the second antenna, and the third antenna may each support a designated band, but may be configured to communicate in a state in which the influence of mutual interference is minimized and/or optimized. However, the above example regarding the designated bands of the first antenna, the second antenna, and the third antenna is only one example, and other embodiments may also be applied. For example, the second antenna may be configured to perform a signal transmission operation (Tx operation).

According to an embodiment, the first communication module 560 may be configured to perform a function, that is, a surrounding reference signal (SRS) function, which enables the first antenna, the second antenna, and the third antenna to support designated bands, respectively, while allowing other bands to be supported as needed. For example, the first communication module 560 may additionally or alternatively include a switching module, for example, an SRS module, for the LNA module and/or the ENDC module. When using the switching module, for example, the signal transmission operation (Tx) performed by the first antenna may be adjusted to be performed by at least one of the first antenna, the second antenna, and the third antenna.

According to an embodiment, the first communication module 560 may be fabricated in a single chip or a single package with a communication processor CP.

According to the comparative embodiment, the electronic device 500' may include a fourth antenna 600, for example, an LDS antenna, disposed on a printed circuit board 530. The fourth antenna 600 may be connected to the second communication module 570. According to an embodiment, the electronic device 500' may be utilized as an antenna for UWB (e.g., ranging) with the fourth antenna 600 alone, or together with the fourth antenna 600 and the second antenna disposed adjacent to the fourth antenna 600.

The second communication module 570 is a communication module for performing an ultra-wideband (UWB) function and may include a UWB module (or UWB IC). The second communication module 570 is connected to the fourth antenna 600 and may also be connected to the second antenna adjacent to the fourth antenna 600. The UWB function may be performed using the fourth antenna 600 connected to the second communication module 570 and/or a combination of the fourth antenna 600 and the second antenna. According to an embodiment, the second communication module 570 may be connected to a UWB patch antenna 571 disposed within the electronic device 200 to perform a positioning (AoA) function through the UWB patch antenna 571, while performing a ranging function using the fourth antenna 600, and/or a combination of the fourth antenna 600 and the second antenna.

Meanwhile, the second communication module 570 may additionally or alternatively include a WiFi module with respect to the UWB module. For example, when the second communication module 570 is a WiFi module, the description of the UWB function in the above-described embodiments and the embodiments described below may be replaced with a description of WiFi communication. That is, when the WiFi module is included as the second communication module 570, the fourth antenna 600 and/or the combination of the fourth antenna 600 and the second antenna may operate as antennas for WiFi communication. Hereinafter, the disclosure will be described focusing on an embodiment including a UWB module as the second communication module 570. However, it should be noted that various communication modules that are capable of using the LDS antenna may be included in various embodiments of the disclosure.

According to an embodiment, the second communication module 570 may be fabricated in a single chip or a single package with an application processor AP.

Referring to FIG. 6, the first conductive portion 512-1 may be spaced apart from the second conductive portion 512-2 by a predetermined distance via the first slit 516c and may be connected to the printed circuit board 530 through terminals 512a and 512b. The second conductive portion 512-2 may be spaced apart from the first conductive portion 512-1 and the third conductive portion 512-3 by a predetermined distance via the first slit 516c and the second slit 516d, respectively, and may be connected to the printed circuit board 530 through terminals 512c and 512d. The third conductive portion 512-3 may be spaced apart from the second conductive portion 512-2 by a predetermined distance via the second slit 516d, and may be connected to the printed circuit board 530 through terminals 512e, 512f, and 512g. However, the number and positions of terminals may vary depending on the embodiment.

Referring to FIGS. 6 and 7, the fourth antenna 600 may at least partially overlap at least one electronic component 540 when the housing is viewed from the front. The fourth antenna 600 may be extend in the width direction of the electronic device 500' while being connected to a portion (e.g., the second portion 532) of the printed circuit board 530 on one side, and in this case, a portion of the extended portion may have a structure of overlapping a first electronic component 540. At this time, a first camera module may correspond to the first electronic component, and a camera included in the first camera module may be an under-display camera (UDC). The camera included in the first camera module may be arranged to be oriented in the height direction (the Z-axis direction) (or toward the display) of the electronic device, as illustrated in FIGS. 6 and 7. That is, FIGS. 6 and 7 may illustrate the rear surface of the first camera module. Meanwhile, the first antenna, i.e., the first conductive portion 512-1, may at least partially overlap the first communication module 560 arranged within the electronic device 500 when viewed from a side of the housing (e.g., when viewed in the direction opposite to the Y-axis direction). The second antenna, i.e., the second conductive portion 512-2, may at least partially overlap the first electronic component 540 arranged within the electronic device when viewed from a side of the housing (e.g., when viewed in the direction opposite to the Y-axis direction). The third antenna, i.e., the third conductive portion 512-3, may at least partially overlap a second electronic component 550 arranged within the electronic device when viewed from a side of the housing (e.g., when viewed in the direction opposite to the Y-axis direction). Here, the second electronic component 550 may be a second camera module different from the first camera module 540, and in this case, the second camera module may be implemented as a multi-camera system.

As illustrated in FIGS. 6 and 7, according to a comparative example, the electronic device 500' may perform communication using a conductive portion of the housing and an LDS antenna. As illustrated in the drawings, the electronic device 500' may have spatial constraints for placing an antenna combining a housing and an LDS in the inner space due to the arrangement of various components, including the first camera module 540, the second camera module 550, a shield can, and/or the first communication module 560. In addition, in the case where an antenna is configured by combining a conductive portion of a housing and an LDS antenna, if an RF communication module (e.g., an ENDC module) is disposed adjacent to the LDS antenna, harmonic components emitted from an RF communication module may be induced through the conductive material housing, thereby causing degradation of the performance of the UWB antenna. For example, a first communication module (560) (e.g., an RF communication module) may be disposed on the first portion 531 or the third portion 533 of the printed circuit board 530, or the boundary between the first portion 531 and the third portion 533. When the first conductive portion 512-1 connected to the first communication module 560 performs an operation of transmitting a signal as a first antenna (e.g., Tx operation), the second conductive portion 512-2 may be coupled by the first conductive portion 512-1, and the second conductive portion 512-2 may be coupled with an LDS antenna 600 disposed adjacent thereto, thereby causing degradation of the UWB ranging performance as a UWB antenna. When an antenna configured by combining a conductive portion of a housing and an LDS antenna is disposed near a camera module, the camera may stop operating. For example, when the fourth antenna 600 is formed as illustrated in FIGS. 6 and 7, the fourth antenna 600 may be disposed at a very close distance (e.g., approximately 0.55 mm) from the first camera module 540 due to spatial constraints of the electronic device. Accordingly, during the operation of the fourth antenna 600 (Tx operation), harmonic components may be induced from the LDS antenna to the first camera module, which may cause malfunctions of the camera (e.g., a mobile industry processor interface (MIPI) error). According to the comparative example, in the case of a foldable electronic device, there are spatial constraints in design, and accordingly, the method of placing the LDS antenna may also be limited. Since there are limitations in how to place the LDS antenna, it may be difficult to solve the problems of degradation of UWB antenna performance and camera malfunction.

Therefore, according to the disclosure, the above-described problems may be solved by providing various embodiments including a PCB-embedded-type antenna (PEA) 537 as a fourth antenna.

FIG. 8 is a view illustrating a printed circuit board according to an embodiment of the disclosure.

The printed circuit board 530 of the disclosure may be disposed inside a housing. Here, the housing will be described using the first housing 210 as an example; however, it is not necessarily limited thereto, and the description of the printed circuit board 530 may also be applied to the printed circuit board included in the second housing 220. The printed circuit board 530 generally includes a rigid portion, but may at least partially include a flexible portion.

The printed circuit board 530 may include a first portion 531, a second portion 532, and a third portion 533 provided to surround a space S in which at least one electronic component 540 is disposed. In this case, the second portion 532 may be disposed at a position facing the first part 531 with the space as the center, and the third portion 533 may be disposed to surround the space between the first portion 531 and the second portion 532. The areas of the first portion 531, the second portion 532, and the third portion 533 may vary depending on the embodiment, and their shapes are not limited to the illustrated embodiment.

The fourth antenna 537 of the disclosure may be disposed on the printed circuit board 530 at a position considerably spaced apart from the RF communication module, considering the position where the RF communication module is installed within the electronic device. For example, when the RF communication module is disposed on the first portion 531, the third portion 5323 of the printed circuit board 530, or on the boundary between the first portion 531 and the third portion 533, the fourth antenna 537 may be disposed on the second portion 532 of the printed circuit board 530.

The fourth antenna 537 may be formed as a PCB-embedded-type antenna (PEA) in the second portion 532 of the printed circuit board 530. According to an embodiment, the fourth antenna 537 may be a loop antenna. The fourth antenna 537 may include a conductive pattern in the form of an open loop or closed loop, and in addition, various forms of conductive patterns may be formed to ensure PEA antenna performance. According to various embodiments, by forming the shapes and lengths of the conductive patterns formed in the embedded area to be uniform/non-uniform, symmetrical/asymmetrical, or regular/irregular, antenna performance that meets the specifications of the printed circuit board and various electronic components may be ensured.

According to an embodiment, a portion of the printed circuit board 530 in which the fourth antenna 537 is embedded (the second portion 532) may have a shape that protrudes a predetermined length in the length direction of the electronic device to be parallel to the first electronic component 540.

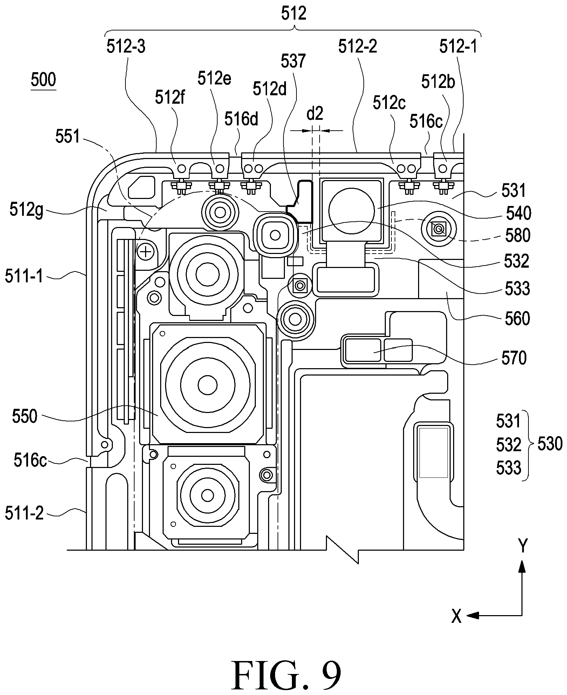

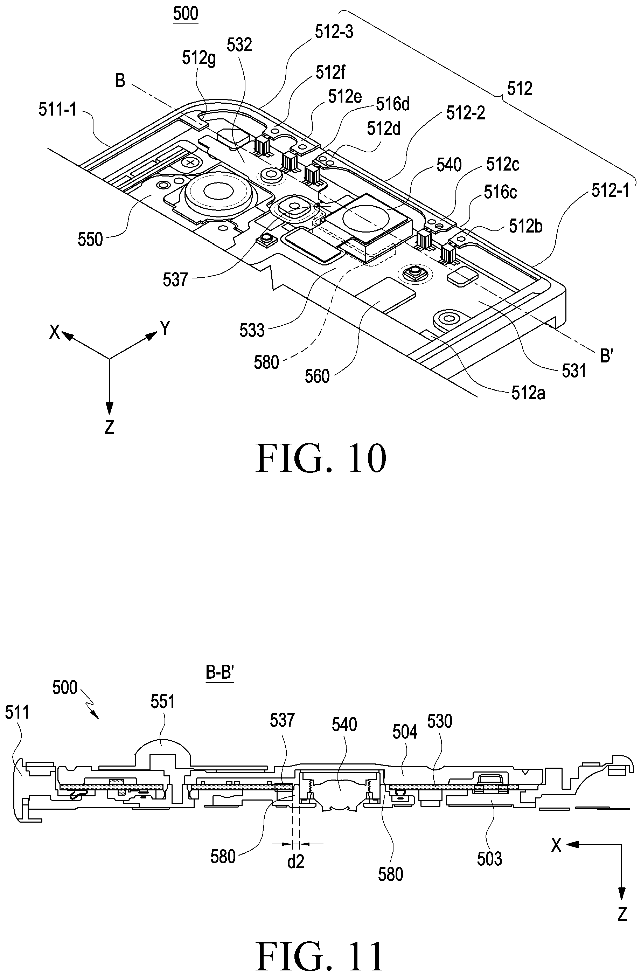

FIG. 9 is an enlarged view of the second side portion of an electronic device housing according to an embodiment of the disclosure. FIG. 10 is an enlarged perspective view of the second side portion of the electronic device housing according to an embodiment of the disclosure.

Referring to FIGS. 8 to 11 together, the electronic device 500 may include a housing 501 at least partially made of a conductive material and a printed circuit board 530, and may include a first antenna operating using the first conductive portion 512-1 of the second side portion 512, a second antenna operating using a second conductive portion 512-2 of the second side portion 512, and a third antenna operating using a third conductive portion 512-3 of the second side portion 512. In addition, the electronic device 500 may include a first communication module 560 connected to the first antenna, the second antenna, and the third antenna. The first communication module 560 may include at least one of an LNA module, an RF module (e.g., an ENDC module), and/or a switching module (e.g., an SRS module). The electronic device 500 may include a fourth antenna 537 disposed on a printed circuit board 530, in which the fourth antenna 537 may be a PCB-embedded-type antenna (PEA). The fourth antenna 537 may be connected to a second communication module 570. According to an embodiment, the second communication module 570 may also be connected to the fourth antenna 537 and/or the second antenna adjacent to the fourth antenna 537. In addition, the second communication module 570 may also be connected to the UWB patch antenna illustrated in FIG. 6. According to an embodiment, the electronic device 500 may be utilized as an antenna for UWB together with the fourth antenna 537 or the fourth antenna 537 and the second antenna disposed adjacent to the fourth antenna 537. Hereinbelow, the detailed description may be omitted to the extent that it overlaps the description of the comparative examples of FIGS. 6 and 7.

As described above, the position where the fourth antenna 537 is disposed may be designed in consideration of the positions of the first camera module 540 and the first communication module 560. In addition, the position where the fourth antenna 537 is disposed may be additionally designed in consideration of the position of the second camera module 550. For example, as illustrated in FIG. 9, a decoration member 551 for decoration of the second camera module 550 may be provided, in which the decoration member 551 may be formed of a metal material. According to an embodiment, when the metal decoration member 551 (the dashed line in FIG. 9) is provided, in order to prevent malfunction of the camera (the second camera module) due to coupling between the fourth antenna 537 and the second camera module 550, the fourth antenna 537 may be disposed between the deco member 551 and the first camera module 540. According to an embodiment, the fourth antenna 537 may be embedded in the printed circuit board 530, and the position at which the fourth antenna 537 is embedded may be configured between the decoration member 551 and the first camera module 540.

Referring to FIGS. 9 and 10, in the electronic device 500, the fourth antenna 537 does not overlap the first camera module 540 when the housing is viewed from the front (when viewed from the cover glass side or the display side of the housing), and may be disposed to be spaced apart from the first camera module 540 compared to the comparative examples of FIGS. 6 and 7, preventing or reducing the malfunction of the camera. For example, the fourth antenna 537 may be disposed to be spaced apart from the first camera module 540 by 1.00 mm or more (e.g., about 1.23 mm) in the width direction. In addition, since the fourth antenna 537 is disposed at a further distance from the RF module 560 than in the comparative example when the RF module 560 is disposed in the first portion 531 or the third portion 533 of the printed circuit board 510, the UWB ranging performance may also be improved.

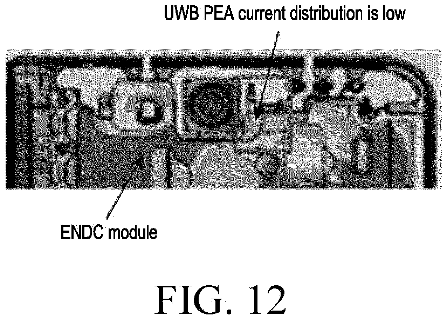

FIG. 11 is a cross-sectional view of the electronic device according to an embodiment of the disclosure. FIG. 12 is a view illustrating a current distribution on the second side of the electronic device housing according to an embodiment of the disclosure.

Referring to FIGS. 9 to 11, the electronic device 500 may further include a wall 580. The wall 580 is provided, for example, for the purpose of suppressing current inflow, and may prevent current emitted from the RF module 560 (e.g., an ENDC module) from flowing toward the first camera module 540 or the fourth antenna 537. The wall 580 may protrude in the height direction of the electronic device from the front surface plate 503 (e.g., the first plate 241 illustrated in FIG. 4) disposed between the rear surface plate 504 and the display of the electronic device 500. The wall 580 may protrude in the height direction of the electronic device at an edge portion of the front surface plate 503 corresponding to at least one of the first portion 531, the second portion 532, or the third portion 533 of the printed circuit board 530. For example, as illustrated in FIG. 9 and FIG. 10, the wall 580 may surround the first camera module 540 below the fourth antenna 537.

Referring to FIG. 12, when the electronic device 500 is configured to include the wall 580 as in the embodiment illustrated in FIG. 10, it may be identified that the current distribution flowing into the fourth antenna 537 is low. For example, regarding UWB efficiency, referring to [Table 1] below, it may be identified that, in the case where the efficiency is equivalent to that of an existing LDS-applied antenna, the UWB ranging aspect is significantly improved.

**[Table 1]**

| UWB efficiency | 5ch | 9ch | UWB ranging distance |
|---|---|---|---|
| LDS-applied antenna | -9.2 dBi | -9.5 dBi | 13 m |
| PEA-applied antenna | -9.5 dBi | -9.7 dBi | 18 m |

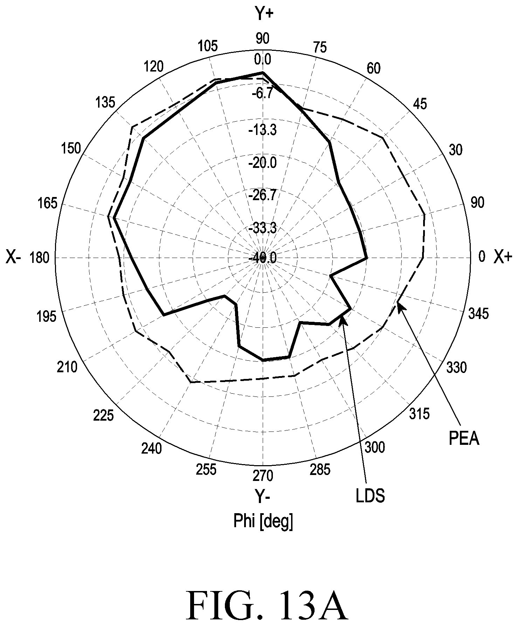

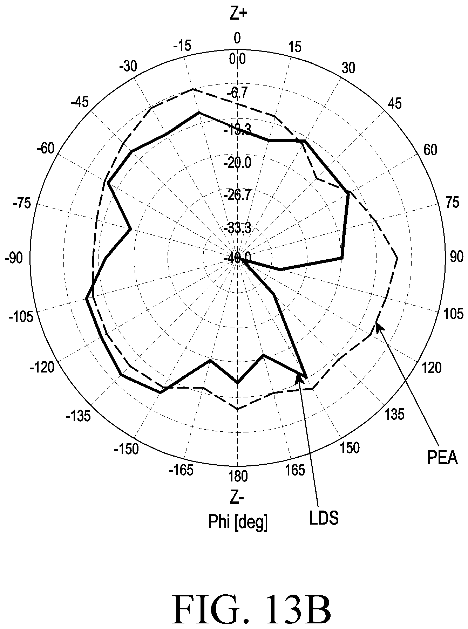

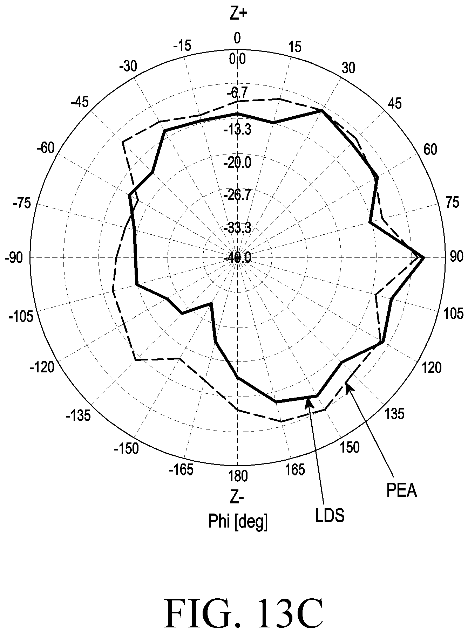

FIG. 13A is a graph showing the antenna performance of an electronic device according to an embodiment of the disclosure. FIG. 13B is a graph showing the antenna performance of the electronic device according to an embodiment of the disclosure. FIG. 13C is a graph showing antenna the performance of the electronic device according to an embodiment of the disclosure. FIGS. 13A to 13C may each show an antenna radiation graph of an embodiment in which the second conductive portion 512-2 of the second side portion 512 illustrated in FIG. 6 and an LDS antenna as the fourth antenna were applied, and an antenna radiation graph of an embodiment in which the second conductive portion 512-2 of the second side portion 512 illustrated in FIG. 9 and a PEA antenna as the fourth antenna were applied. FIGS. 13A to 13C may respectively show beam patterns obtained by cutting an antenna beam pattern radiated in a spherical type in the Y-axis, Z-axis (when phi = 0), and Z-axis (when phi = 90) directions.

In the embodiment in which the second conductive portion 512-2 of the second side portion 512 and an LDS antenna as the fourth antenna were applied, it may be identified that a null section and directivity tendency are present due to LDS characteristics. In contrast, in the embodiment in which the second conductive portion 512-2 of the second side portion 512 and the PEA antenna as the fourth antenna were applied, it may be identified that the amount of power loss (back off) is smaller than that in the case of applying the LDS antenna, due to the isotropic radiation pattern.

In summary, according to various embodiments of the present disclosure, through the change of an antenna structure in an electronic device (e.g., a foldable electronic device), during antenna operation (e.g., Tx operation), degradation of UWB ranging performance may be prevented, a camera operation stoppage phenomenon may be prevented or reduced, and camera quality may be enhanced.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, it is possible to provide an electronic device 500. An electronic device 500 may include a housing 501 at least partially made of a conductive material, a printed circuit board 530, a first antenna configured to operate using a first conductive portion 512-1 of the housing, a second antenna configured to operate using a second conductive portion 512-2 of the housing, a third antenna configured to operate using a third conductive portion 512-3 of the housing, a fourth antenna 537 disposed on the printed circuit board, a first communication module 560 connected to the first antenna, the second antenna, and the third antenna, and a second communication module 570 connected to the fourth antenna. The printed circuit board may include a first portion 531 formed to surround a space where at least one electronic component 540 is disposed, a second portion 532 facing the first portion, and a third portion 533 between the first portion and the second portion. The first communication module may be disposed on the first portion or the third portion of the printed circuit board. The fourth antenna may be disposed on the second portion of the printed circuit board.

According to an embodiment, the fourth antenna may be a PCB embedded-type antenna (PEA) embedded in the second portion of the printed circuit board.

According to an embodiment, the fourth antenna may be disposed a predetermined distance apart from the at least one electronic component.

According to an embodiment, the fourth antenna may be disposed at least 1.00 mm apart from the at least one electronic component.

According to an embodiment, the at least one electronic component may be a camera module.

According to an embodiment, the first communication module 560 may include at least one of an LNA module, a radio-frequency (RF) module, and/or a switching module.

According to an embodiment, the second communication module 570 may include an ultra-wideband (UWB) module. Alternatively, the second communication module 570 may, alternatively or additionally, include a Wi-Fi module in addition to the UWB module.

According to an embodiment, the fourth antenna may be an antenna for UWB distance measurement, and the UWB patch antenna is an antenna for UWB AoA measurement.

According to an embodiment, the first antenna may at least partially overlap the first communication module 560 disposed within the electronic device 500 when viewed from a side of the housing. The second antenna may at least partially overlap a first electronic component 540 disposed within the electronic device when viewed from a side of the housing. The third antenna may at least partially overlap a second electronic component 550 disposed within the electronic device when viewed from a side of the housing.

According to an embodiment, the electronic device may be a foldable electronic device, and the housing may include a first housing and a second housing foldable relative to the first housing. The housing may further include a hinge structure rotatably connecting the first housing and the second housing and providing a folding axis at the center of the first housing and the second housing.

According to an embodiment, the first housing may include a first surface oriented in a first direction, a second surface oriented in a second direction opposite to the first direction, and a first side surface member at least partially surrounding a space between the first surface and the second surface. The second housing may include a third surface oriented in a third direction, a fourth surface oriented in a fourth direction opposite to the third direction, and a second side surface member at least partially surrounding a space between the third surface and the fourth surface.

According to an embodiment, the first side surface member or the second side surface member may include a first side portion disposed parallel to the folding axis, a second side portion extending in a direction intersecting the folding axis from one end of the first side portion, a third side portion extending in a direction intersecting the folding axis from another end of the first side portion, a fourth side portion extending parallel to the folding axis and connecting the second side portion and the third side portion, and multiple slits formed in the first side portion, the second side portion, and the third side portion.

According to an embodiment, the second side portion may include a ground terminal and a power terminal.

According to an embodiment, the second side portion may include a first conductive portion 512-1 and a second conductive portion 512-2 separated by a first slit 516c, and a second conductive portion 512-2 and a third conductive portion 512-3 separated by a second slit 516d.

According to an embodiment, the second conductive portion of the second side portion may be electrically connected to a power portion or a ground portion included in the first portion of the printed circuit board at a position adjacent to the first slit, and may be electrically connected to a ground portion or a power portion included in the second portion of the printed circuit board at a position adjacent to the second slit.

According to an embodiment, the electronic device may further include a wall protruding from an edge of at least one of the first portion or the third portion of the printed circuit board in a height direction of the electronic device.

According to an embodiment of the disclosure, an electronic device 500 may include a housing 501 at least partially made of a conductive material, a printed circuit board 530, a first metal antenna configured to operate using at least a portion 512-1 of the housing, a second metal antenna separated from the first metal antenna by a slit, a PCB embedded-type antenna (PEA) 537 embedded in the printed circuit board, a first communication module 560 connected to the first metal antenna and the second metal antenna, and a second communication module 570 connected to the PCB-embedded-type antenna. The printed circuit board may include a first portion 531 formed to surround a space where at least one electronic component 550 is disposed, a second portion 532 facing the first portion, and a third portion 533 between the first portion and the second portion. The first communication module may be disposed on the first portion or the third portion of the printed circuit board. The PCB-embedded-type antenna may be embedded in a second portion of the printed circuit board.

According to an embodiment, the printed circuit board embedded antenna may be a loop antenna.

According to an embodiment, the PCB-embedded-type antenna may be disposed apart a predetermined distance from the camera module which is the at least one electronic component.

According to an embodiment, the first communication module 560 may include at least one of an LNA module, a radio-frequency (RF) module, and/or a switching module.

According to an embodiment, the second communication module 570 may include an ultra-wideband (UWB) module. Alternatively, the second communication module 570 may, alternatively or additionally, include a Wi-Fi module in addition to the UWB module.

According to an embodiment of the disclosure, it is possible to provide a foldable electronic device 500. A foldable electronic device 500 may include a first housing 210 including a first side surface member 501 at least partially surrounding a first surface oriented in a first direction, a second surface oriented in a second direction opposite to the first direction, and a space between the first surface and the second surface, and at least partially made of a conductive material, and a second housing 220 including a second side surface member 502 at least partially surrounding a third surface oriented in a third direction, a fourth surface oriented in a fourth direction opposite to the third direction, and a space between the third surface and the fourth surface, the second housing being at least partially made of a conductive material and being foldable relative to the first housing, a hinge structure 265 rotatably connecting the first housing and the second housing and providing a folding axis at a center of the first housing and the second housing, and a printed circuit board 530. The first side surface member or the second side surface member may include a first side portion disposed parallel to the folding axis, a second side portion extending in a direction intersecting the folding axis from one end of the first side portion, a third side portion extending in a direction intersecting the folding axis from another end of the first side portion, a fourth side portion extending parallel to the folding axis and connecting the second side portion and the third side portion, and multiple slits formed in the first side portion, the second side portion, and the third side portion. The foldable electronic device 500 may further include a first antenna configured to operate using a first conductive portion 512-1 of the second side portion, a second antenna configured to operate using a second conductive portion 512-2 of the second side portion, a third antenna configured to operate using a third conductive portion 512-3 of the third side portion, a fourth antenna disposed on the printed circuit board, a first communication module 560 connected to the first antenna, the second antenna, and the third antenna, and a second communication module 570 connected to the fourth antenna. The printed circuit board may include a first portion 531 formed to surround a space where a camera module 540 is disposed, a second portion 532 facing the first portion, and a third portion 533 between the first portion and the second portion. The first communication module may be disposed on the first portion or the third portion of the printed circuit board. The fourth antenna may be disposed on the second portion of the printed circuit board.

According to an embodiment, the fourth antenna may be a PCB embedded-type antenna (PEA) embedded in the second portion of the printed circuit board.

It may be apparent to a person ordinarily skilled in the technical field to which the disclosure belongs that the electronic devices of the above-described various embodiments are not limited by the above-described embodiments and drawings, and can be variously substituted, modified, and changed within the technical scope of the disclosure.

## Claims

1. An electronic device (500) comprising:
a housing (501) at least partially made of a conductive material;
a printed circuit board (530);
a first antenna configured to operate using a first conductive portion (512-1) of the housing;
a second antenna configured to operate using a second conductive portion (512-2) of the housing;
a third antenna configured to operate using a third conductive portion (512-3) of the housing;
a fourth antenna (537) disposed on the printed circuit board;
a first communication module (560) connected to the first antenna, the second antenna, and the third antenna; and
a second communication module (570) connected to the fourth antenna,
wherein the printed circuit board comprises a first portion (531) formed to surround a space where at least one electronic component (540) is disposed, a second portion (532) facing the first portion, and a third portion (533) between the first portion and the second portion,
wherein the first communication module is disposed on the first portion or the third portion of the printed circuit board, and
wherein the fourth antenna is disposed on the second portion of the printed circuit board.

2. The electronic device of claim 1, wherein the fourth antenna is a printed circuit board (PCB) embedded-type antenna (PEA) embedded in the second portion of the printed circuit board.

3. The electronic device of claim 1 or 2, wherein the fourth antenna is disposed at a predetermined distance apart from the at least one electronic component.

4. The electronic device of claim 3, wherein the fourth antenna is disposed at least 1.00 mm apart from the at least one electronic component.

5. The electronic device of one of claims 1 to 4, wherein the at least one electronic component is a camera module.

6. The electronic device of one of claims 1 to 5, wherein the first communication module (560) comprises at least one of a low noise amplifier (LNA) module, a radio-frequency (RF) module, and/or a switching module, and
wherein the second communication module (570) comprises an ultra-wide band (UWB) module and/or a Wi-Fi module.

7. The electronic device of claim 6, wherein the fourth antenna is an antenna for UWB distance measurement, and the UWB patch antenna is an antenna for UWB AoA measurement.

8. The electronic device of one of claims 1 to 7, wherein the first antenna at least partially overlaps the first communication module (560) disposed within the electronic device (500) when viewed from a side of the housing,
wherein the second antenna at least partially overlaps a first electronic component (540) disposed within the electronic device when viewed from the side of the housing, and
wherein the third antenna at least partially overlaps a second electronic component (550) disposed within the electronic device when viewed from the side of the housing.

9. The electronic device of one of claims 1 to 8, wherein the electronic device is a foldable electronic device,
wherein the housing comprises:
a first housing,
a second housing foldable relative to the first housing, and
a hinge structure rotatably connecting the first housing and the second housing and providing a folding axis at a center of the first housing and the second housing.

10. The electronic device of claim 8, wherein the first housing comprises a first surface oriented in a first direction, a second surface oriented in a second direction opposite to the first direction, and a first side surface member at least partially surrounding a space between the first surface and the second surface, and
wherein the second housing comprises a third surface oriented in a third direction, a fourth surface oriented in a fourth direction opposite to the third direction, and a second side surface member at least partially surrounding a space between the third surface and the fourth surface.

11. The electronic device of claim 10, wherein the first side surface member or the second side surface member comprises:
a first side portion disposed parallel to the folding axis;
a second side portion extending in a direction intersecting the folding axis from one end of the first side portion;
a third side portion extending in a direction intersecting the folding axis from another end of the first side portion;
a fourth side portion extending parallel to the folding axis and connecting the second side portion and the third side portion; and
multiple slits formed in the first side portion, the second side portion, and the third side portion.

12. The electronic device of claim 11, wherein the second side portion comprises a ground terminal and a power terminal.

13. The electronic device of claim 12, wherein the second side portion comprises a first conductive portion (512-1) and a second conductive portion (512-2) separated by a first slit (516c), and a second conductive portion (512-2) and a third conductive portion (512-3) separated by a second slit (516d).

14. The electronic device of claim 13, wherein the second conductive portion of the second side portion is electrically connected to a power portion or a ground portion included in the first portion of the printed circuit board at a position adjacent to the first slit, and is electrically connected to a ground portion or a power portion included in the second portion of the printed circuit board at a position adjacent to the second slit.

15. The electronic device of one of claims 1 to 14, further comprising:
a wall protruding from an edge of at least one of the first portion or the third portion of the printed circuit board in a height direction of the electronic device.
